# EUROPÄISCHE PATENTSCHRIFT

(11) **EP 2 815 881 B1**
(45) Veröffentlichungstag und Bekanntmachung des Hinweises auf die Patenterteilung: **17.11.2021**
(21) Anmeldenummer: 14172895.6
(22) Anmeldetag: 18.06.2014
(51) Int. Cl.: B32B 9/00, B32B 9/04, B32B 11/08, B32B 11/10, B32B 11/12, B32B 3/08, B32B 3/14, B32B 3/16, D06N 5/00, E04D 5/10, E04D 5/00

(54) **Dampfsperrbahn**
Vapour barrier
Feuille anti vapeur

(30) Priorität: 20.06.2013 AT 504082013
(43) Veröffentlichungstag der Anmeldung: 24.12.2014
(73) Patentinhaber: Büsscher & Hoffmann Gesellschaft m.b.H., 4470 Enns (AT)
(72) Erfinder: Landl, Karl, 4407 Steyr (AT)
(74) Vertreter: Müllner, Martin

(56) Entgegenhaltungen:
- DE-U1-202009 003 329
- None

## Beschreibung

### Technisches Gebiet

Die vorliegende Erfindung betrifft eine Dampfsperrbahn auf Bitumenbasis, insbesondere Elastomerbitumenbasis, die eine Metallfolie, insbesondere eine Aluminiumfolie, zur Erzielung eines s_{d} -Wertes von zumindest 1500 m enthält.

### Stand der Technik

Unter einer Dampfsperrbahn versteht man eine Bahn mit einem s_{d}-Wert (Wasserdampfdichtheit) von mindestens 1500 m. Dies ist ein sehr hoher Wert. Um diesen zu erreichen wird üblicher Weise eine Metallbandeinlage, meist eine Aluminiumbandeinlage, vorgesehen.

Um auch eine genügende mechanische Festigkeit zu erreichen, hat die Elastomerbitumenbahn zusätzlich eine Trägerschicht, z.B. ein Kunststoffvlies, eine Glasfasergewebe- oder eine Glasvlieseinlage oder eine Textileinlage. Diese Bahnen werden auf Rollen gewickelt und so verkauft. Um ein Verkleben zu verhindern kann die Oberseite fein mit Sand bestreut sein. Die Unterseite kann mit einer Kaschierfolie oder Trennfolie ausgeführt sein.

Derartige Dampfsperrbahnen werden insbesondere im Flachdachbereich unter der Wärmedämmung angebracht. Sie soll verhindern, dass Feuchtigkeit in die Wärmedämmung eindringt und infolge des Temperaturgradienten in der Wärmedämmung kondensiert. Dazu ist wichtig, dass die Wärmedämmung selbst und alle darüber befindlichen Lagen deutlich weniger dampfdicht sind, sodass Wasserdampf, der durch die Dampfsperrbahn diffundiert, nach oben wegdiffundieren kann.

Derartige Dampfsperrbahnen werden lose, teil- oder vollflächig im Flämm-/ Schweißverfahren (Stöße versetzt angeordnet, Nähte mind. 8 cm und Stöße mind. 10 cm überlappt) mit dem Untergrund verklebt.

Darüber kommt eine Wärmedämmschicht, z.B. aus EPS-Platten. (EPS=expanded polystyrene) Oft werden diese auf der Dampfsperrbahn verklebt. Oberhalb der Wärmedämmschicht kommt dann die Dachhaut, die die Wasserdichtigkeit gewährleisten soll. Diese Dachhaut kann wiederum eine Elastomerbitumenbahn sein. Wenn darüber keine weitere Schicht (wie Erde bei einem Gründach oder Kies bei einem Kiesdach) kommt, muss allerdings auf UV- und Witterungsschutz geachtet werden, da Bitumen weder UV- noch witterungsbeständig ist. Dies kann durch eine Bestreuung mit Schiefer erzielt werden. Die Dachhaut soll - wie oben bereits angedeutet - wesentlich weniger wasserdampfdicht sein wie die Dampfsperrbahn, typischer Weise soll der s_{d}-Wert maximal 300 m sein. Solch eine Bitumenbahn ist aus DE 202009003329 U1 bekannt.

### Kurzbeschreibung der Erfindung

Es ist Aufgabe der vorliegenden Erfindung, eine Dampfsperrbahn der eingangs genannten Art zu verbessern.

Dies wird erfindungsgemäß dadurch erreicht, dass die Dampfsperrbahn mit Schiefer bestreut ist.

Diese Bestreuung mit Schiefer bewirkt mehrere Vorteile. Zunächst wird die Haftfestigkeit der Klebeverbindung zu den Wärmedämmplatten verbessert. Weiters sind mechanische Defekte, die nach dem Verlegen durch Betreten entstehen können, durch die Schieferbestreuung wesentlich leichter sichtbar. Und schließlich ist es auch nicht mehr notwendig, die Wärmedämmplatten unmittelbar nach dem Verlegen der Dampfsperrbahn anzubringen, um den UV- und Witterungsschutz zu erreichen, denn die Schieferbestreuung bewirkt dies schon selbst, ohne weitere Schicht. Es ist somit möglich (z.B. bei einer Schlechtwetterperiode), nach dem Anbringen der erfindungsgemäßen Dampfsperrbahn den Bau zu unterbrechen.

Selbstverständlich verhindert die Schieferbestreuung auch ein Verkleben der gerollten Bahn, so wie dies von der Sandbestreuung bereits bekannt ist.

### Kurze Beschreibung der Zeichnungsfiguren

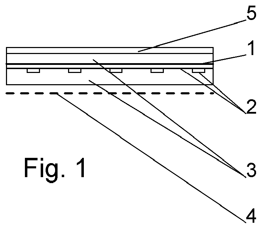

Anhand der beiliegenden Zeichnung wird die vorliegende Erfindung näher erläutert. Die einzige Figur zeigt einen Schnitt durch eine erfindungsgemäße Dampfsperrbahn.

### Beschreibung der Ausführungsarten

Eine mit einer Trägerschicht 2 verstärkte Aluminiumfolie 1 ist beidseits von Elastomerbitumen 3 umgeben. Unten ist das Elastomerbitumen 3 durch eine Trenn- oder Kaschierfolie 4 abgedeckt. Statt der Trenn- oder Kaschierfolie 4 können auch Sand, ein Vlies oder andere Materialien verwendet werden. Oben ist das Elastomerbitumen 3 erfindungsgemäß mit Schiefer 5 bestreut.

## Patentansprüche

1. Dampfsperrbahn auf Bitumenbasis, insbesondere Elastomerbitumenbasis, die eine Metallfolie, insbesondere eine Aluminiumfolie (1), zur Erzielung eines s_{d} -Wertes von zumindest 1500 m enthält, **dadurch gekennzeichnet, dass** die Dampfsperrbahn mit Schiefer (5) bestreut ist.

2. Dampfsperrbahn nach Anspruch 1, **dadurch gekennzeichnet, dass** die Metallfolie durch eine Trägerschicht (2) aus Kunststoffvlies, Glasfasergewebe oder Glasvlieseinlage oder andere Textilien verstärkt ist.

## Claims

1. Vapour barrier membrane based on bitumen, in particular based on elastomer bitumen, which contains a metal foil, in particular an aluminium foil (1), for achieving an s_{d}-value of at least 1500 m, **characterized in that** the vapour barrier membrane is sprinkled with slate (5).

2. Vapour barrier membrane according to claim 1, **characterized in that** the metal foil is reinforced by a support layer (2) made of plastic fleece, glass fiber fabric or glass fleece insert or other textiles.

## Revendications

1. Bande servant de pare-vapeur qui est à base de bitume, notamment à base de bitume élastomère, et qui contient une feuille métallique, notamment une feuille d'aluminium (1), afin d'atteindre une valeur s_{d} supérieure ou égale à 1 500 m, **caractérisée en ce que** la bande servant de pare-vapeur est saupoudrée de schiste (5).

2. Bande servant de pare-vapeur selon la revendication 1, **caractérisée en ce que** ladite feuille métallique est renforcée par une couche de support (2) constituée d'un non-tissé de matière plastique, d'un tissu de fibres de verre ou d'une natte de verre non-tissé ou d'autres matières textiles.
